# EUROPEAN PATENT SPECIFICATION

(11) **EP 1 710 509 B1**
(45) Date of publication and mention of the grant of the patent: **03.02.2016**
(21) Application number: 06110375.0
(22) Date of filing: 24.02.2006
(51) Int. Cl.: F16L 41/02, F28F 9/26, F16L 41/14, F24D 19/00

(54) **Piping union**
Rohrverbindung
Raccord de tuyaux

(30) Priority: 28.02.2005 IT BS20050025
(43) Date of publication of application: 11.10.2006
(73) Proprietor: CO.GE.FIN. S.r.l., 25075 Nave (IT)
(72) Inventor: Rossetti, Danilo, 25075, Nave (BS) (IT)
(74) Representative: Tirloni, Bartolomeo

(56) References cited:
- EP-A1- 1 197 707
- WO-A1-2004/090429
- WO-A2-02/16808
- WO-A2-2004/023015
- CH-A5- 651 908
- DE-A1- 19 711 074
- DE-U1- 29 723 433
- US-A- 2 486 141
- US-B1- 6 957 831

## Description

The aim of the present invention is a piping union. Piping unions are generally used in the heating plants (of rooms in housing and commercial buildings or of other type) in order to operably connect piping suitable for the transport of a fluid, generally hot water. In particular, the piping unions can be employed on radiating elements characterized by at least two parallel horizontal manifolds for connecting the manifolds themselves, so as to supply an adequate feed with the fluid coming from the plumbing. The invention will be described with reference to this type of application, even if, of course, it could find an application in any other plant in which it is required the joining of piping.

US 2,486,141 discloses a diversion fitting for one-pipe hot-water heating systems.

WO 2004/090429 discloses an hydraulic joint articulated device, suitable for heat radiators circulated by a heat transfer fluid, having at least one articulated connector.

DE 197 11 074 A1 discloses a device for connecting a radiating element to heating system pipes, having an external pipe and an internal pipe, the latter being telescopically insertable in the external pipe.

EP1197707 discloses an assembly comprising a first and a second duct and a coupler for connection along a vertical axis of the first and second ducts, comprising a first cylindrical portion for internally receiving the first duct and a second cylindrical portion for externally receiving the second duct.

The technical problem at the basis of the present invention is represented by the need of properly feeding with the hot water coming from the piping of a plumbing a radiating element (usually called radiator or heating element) having more than one manifold in parallel. Such radiating elements can consist of a single piece or being obtained by welding two or more radiating elements, each equipped with an own manifold. They have a heating surface greater than the conventional radiating elements and therefore are useful for the heating of environments in which the spaces intended for the radiating elements are narrow (for example in case of rooms having windows placed at a reduced height from the floor).

Notoriously, this technical problem has been overcome by welding to the ends of the manifolds of the radiating element which do not contact the piping of the plumbing of the room, a fitting formed by a tube preferably half-moon bent.

Such solution, however, results unaesthetic as on the radiating element the welding mark remains, which will be only removed with further processings which increase the costs. Furthermore, it is required to have many kinds of pipe fittings, each equipped with a particular bending in order to adapt such fitting to any distance between the manifolds of the radiating element and to any aesthetical effect which one wishes to obtain. Finally, a joining of more than two manifolds results extremely difficult to carry out.

A second known solution is to provide the plumbing with multiple discharge and return piping, so as to operably connect each manifold of the radiating element with one of these piping.

However, also this second solution presents some drawbacks. First of all, it is necessary to modify the plumbing of the room with a remarkable increase at the costs and execution complexity of the plant itself. For this reason, also this second solution is not feasible for radiating elements having more than two parallel manifolds. Moreover, the radiating element would be controlled by more than one thermostatic valve and, accordingly, the management of the room temperature would become very complicated.

The aim of the present invention is to overcome the drawbacks above complained. Therefore, the aim of the invention is to present a piping union which is compatible with the conventional heating plants and which allows an easy management of the temperature of the room to be heated. A further aim of the invention is to provide a fitting for radiating elements having more than two parallel manifolds. Moreover, an aim of the present invention is to join the manifolds of radiating elements placed at any distance from each other. Finally, an aim of the invention is to show a pipe fitting which is easy to produce and inexpensive and which gives a pleasant aesthetical effect to the radiating element. These and other objects, which will better result during the following description, are attained, according to the present invention, by a piping union according to the appended claims.

It is now reported, by way of indicative and not limiting example, the description of a preferred but not exclusive embodiment of a piping union according to the invention, shown in the enclosed drawings, herein:

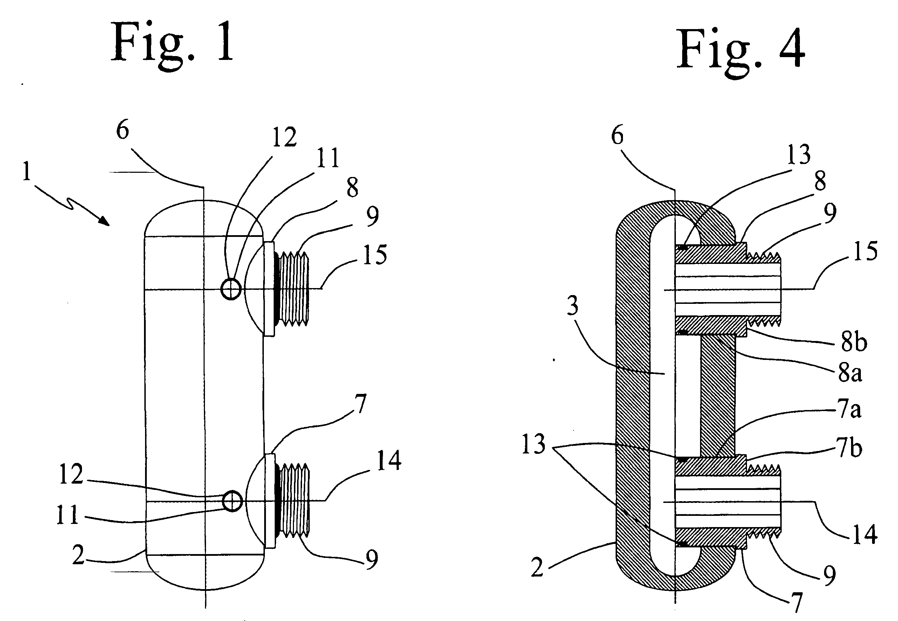

- figure 1 shows a top view of a device in a first embodiment;

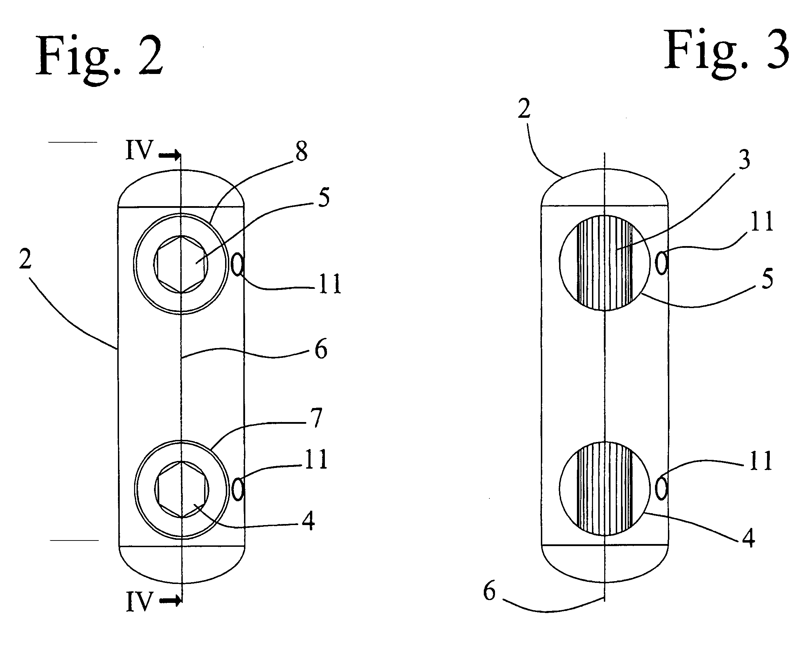

- figure 2 shows a front view of the device of figure 1;
- figure 3 shows a front view of the device of figure 1 without tubular bodies;
- figure 4 shows a section of the device of figure 2 taken according the lines IV-IV;

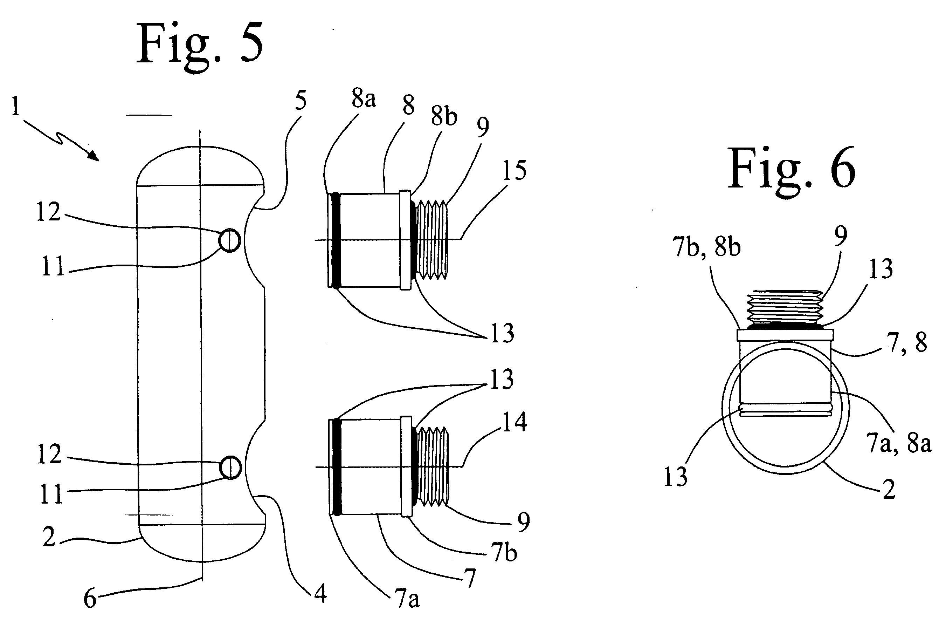

- figure 5 shows a top view of the device of figure 1 in which such device is disassembled;
- figure 6 shows a side view of the device of figure 1;

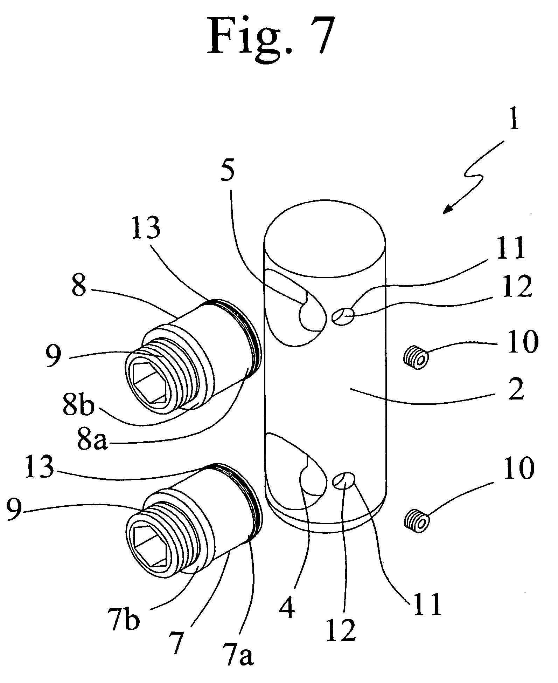

- figure 7 shows a perspective view of the device of figure 1 in which such device is disassembled;

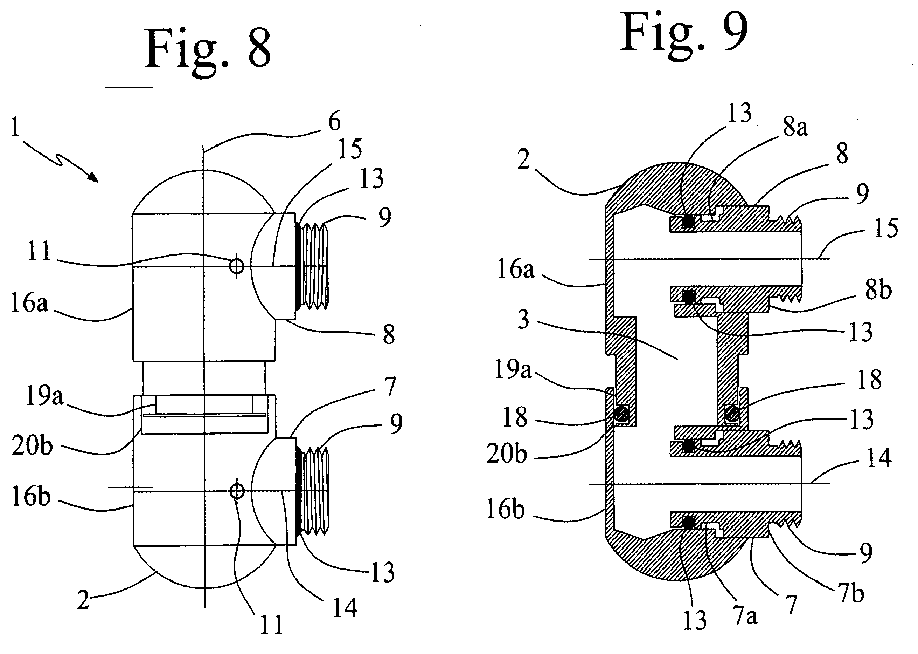

- figure 8 shows a top view of a device in a second embodiment;
- figure 9 shows a section of the device of figure 8;

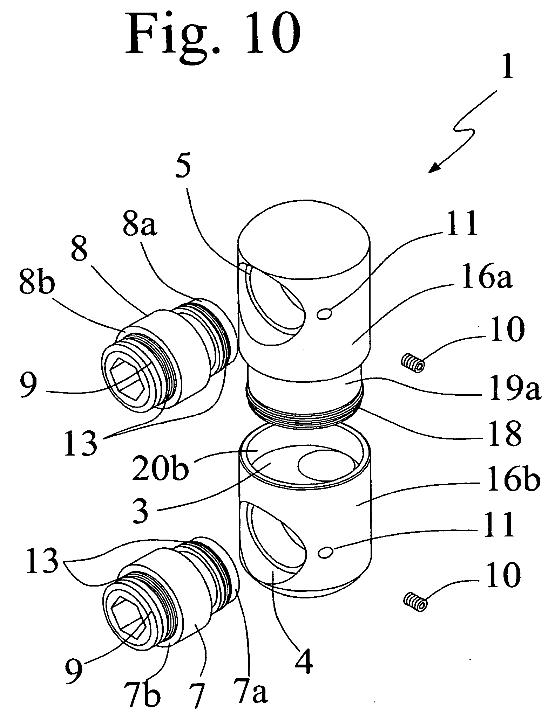

- figure 10 shows a perspective view of the device of figure 8 in which such device is disassembled;

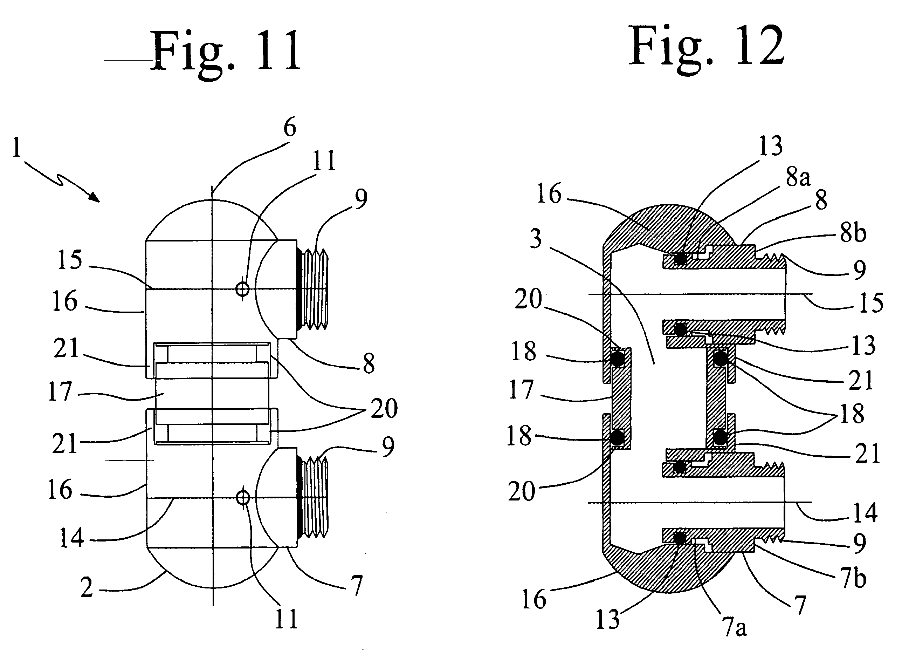

- figure 11 shows a top view of the device of the invention;
- figure 12 shows a section of the device of figure 11;

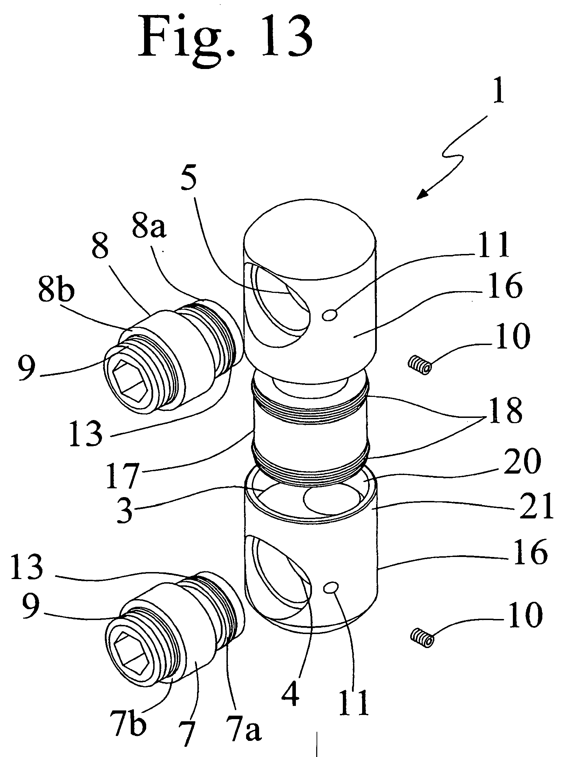

- figure 13 shows a perspective view of the device of figure 11 in which such device is disassembled.

With reference to the mentioned figures, a piping union 1 according to the invention includes a main body 2, having a passage 3 for the fluid coming from such piping, equipped with at least an inlet 4 and at least an outlet 5. According to the invention, the union 1 further presents at least an inlet tubular body 7 and at least an outlet tubular body 8, respectively associable with the inlet 4 and the outlet 5 of the passage 3 of the main body 2. Such inlet and outlet tubular bodies 7, 8 are inserted in the main body 2 as a fitting, in particular in such a way that the main axis 6 of the main body 2 is perpendicular to the main axes 14, 15 of the two tubular bodies 7, 8. Furthermore, the main axes 14, 15 of the two tubular bodies 7, 8, when inserted in the main body 2, are in turn parallel therebetween.

The portion 7a, 8a of the tubular bodies 7, 8 which contacts the main body 2 is advantageously equipped with first sealing gaskets 13, for example O-rings, for improving the fastening between the different bodies 2, 7, 8 and avoiding any water leakages in the environment to be heated, which would also lead to a faster wear of the union 1 itself.

Preferably, the mounting between the main body 2 and the tubular bodies 7, 8 is ensured through fastening means 10. They are generally represented by grub screws which are screwed, preferably using an Allen wrench, in proper through-seats 11 having a thread 12, obtained in the main body 2 for carrying out a pusher action on the tubular bodies 7, 8.

Advantageously, this kind of mounting allows to disconnect at any time the tubular bodies 7, 8 from the main body 2 for performing maintenance operations, such as the replacement of the first sealing gaskets 13 or for changing the configuration of the radiating element itself.

The number of tubular bodies 7, 8 which can be inserted in the main body 2, and therefore the total number of inlets 4 and outlets 5 of the passage 3 of the main body 2 is equal to the number of horizontal manifolds included in the radiating element on which the union is to be carried out. In fact, the tubular bodies 7, 8 are directly associable to the manifolds of the radiating elements.

More precisely, they are screwed to the manifolds of the radiating elements thanks to a thread 9 on an end 7b, 8b thereof. Also the fastening between the tubular bodies 7, 8 and the manifolds is made safer by first sealing gaskets 13, preferably placed on the tubular body 7, 8 upstream of the thread 9.

In the assembly step, therefore, one proceeds, first of all, to the screwing of the tubular bodies 7, 8 on the manifolds of the radiating element and, subsequently, the inserting of the main body 2 and the fastening through the fastening means 10 are carried out. In particular, in a radiating element equipped with two parallel horizontal manifolds, two piping unions 1 are arranged, each equipped with an inlet tubular body 7 and an outlet tubular body 8. In this way, the fluid coming from the plumbing enters the first manifold in the upper part of the radiating element, goes across it, and through the union 1, reaches the second upper manifold. Subsequently, the fluid falls through the vertical tubes of the radiating element towards the second lower manifold where, through the second fitting 1 reaches the first lower manifold, which also collects the fluid falling from the vertical tubes connected with the first upper manifold and, after having cross it, returns in the plumbing.

A radiating element with three horizontal manifolds, on the contrary, is equipped with a first fitting 1 associated with the upper manifolds having an inlet 4 and two outlets 5 and a second fitting 1 mounted on the lower manifolds having two inlets 4 and an outlet 5.

The main body 2 is formed by at least two secondary bodies 16 associable therebetween, each containing the inlet 4 or the outlet 5 of the fluid passage 3. In this way, the union 1 can be mounted on any radiating element independently of the existing distance between the parallel horizontal manifolds. Such distance, in fact, is not conventionally fixed, as the radiating elements of this type have a reduced market share and as they can also be formed by two or more radiating elements welded together. A piping union 1 according to the device in the second embodiment consists of two or more secondary bodies 16 telescopically associable for adjusting the distance between the inlet and outlet tubular bodies 7, 8.

Preferably, the secondary bodies 16 are associated as fitting. Therefore, for example, when the main body 2 of the union 1 consists of two secondary bodies 16a, 16b, a first secondary body 16a is equipped with an end portion 19a of a smaller diameter with respect to the diameter of a second secondary body 16b, so as to allow such end portion 19a to be inserted in a seat 20b foreseen in this second secondary body 16b.

Advantageously, this end portion 19a suitable for being inserted within the second secondary body 16b is equipped with second sealing gaskets 18, for example O-rings, for preventing leakages of fluid from the passage 3.

In this way, the coupling between the secondary bodies 16a, 16b is structured so as to allow a following disassembling which permits, for example, to carry out maintenance operations.

Also in this case, the number of secondary bodies 16 is equal to the number of tubular bodies 7, 8 and the number of horizontal manifolds of the radiating element on which it is mounted.

In the assembly step, the inlet and outlet tubular bodies 7, 8 are screwed to the manifolds of a radiating element, then the main body 2 is formed by mounting the secondary bodies 16 which composes it and by adjusting the distance based on the distance of the manifolds of the radiating element and, finally, one proceeds to the mounting of the main body 2 on the tubular bodies 7, 8 by further adjusting the fastening between the secondary bodies 16, if necessary.

The union 1 according to the invention further includes at least a connecting body 17, through which the two or more secondary bodies 16 are mutually associable. In particular, each secondary body 16 results telescopically connected to a connecting body 17 always for adapting the union 1 to any distance between the manifolds of the radiating element.

In this case, each secondary body 16 is equipped with a seat 20 in at least an end portion 21 thereof, in which the connecting body 17 is fitted for forming the structure of the main body 2. Advantageously, also the coupling between the secondary bodies 16 and those of connection 17 is fixed by second sealing gaskets 18 (for example O-rings) which prevent the leakage of fluid from the passage 3, preferably placed in correspondence with the portions of the connecting body 17 which are inserted in the secondary bodies 16.

After the mounting on the radiating element, the union 1 can be disassembled for performing maintenance operations.

A main body 2 includes a number of secondary bodies 16 equal to the number of horizontal manifolds of the radiating element on which it is mounted and a number of connecting bodies 17 equal to the number of secondary bodies 16 less one. The assembly of this kind of unions 1 follows the preceding one. Indeed, after having screwed the tubular bodies 7, 8 to the manifolds of the radiating element, the main body 2 is carried out by mounting the secondary bodies 16 on the connecting bodies 17 and adjusting the distance thereof. Subsequently, such main body 2 is fixed as a joint on the tubular bodies 7, 8, preferably by also using the fastening means 10 and the adjustment previously carried out on the telescopic mechanism is improved.

In practice, the materials employed as well as the dimensions could be any one, depending on the requirements.

Furthermore, all the details are replaceable by other technically equivalent elements.

The invention attains important advantages.

First of all, the union above described is utilizable with all the heating plants commonly carried out and can be directly mounted on the radiating elements without the need of further processings, which would negatively weigh on the costs. Secondly, the possibility of a telescopic adjustment of the main body length allows to adapt the union to any kind of radiating element having more than one horizontal manifold. A further advantage is that the union of the invention easily allows to join together more than two manifolds and therefore it can be also used on radiating elements of large dimensions. Furthermore, the couplings between the different components of the union are reversible so as to make easier the maintenance operations, for example. The union shown by the invention is also advantageous because it has a pleasant impact on the aesthetic of the radiating element. Finally, a radiating element equipped with the shown union has the same operation principle than a conventional radiating element and therefore, for example, the temperature of the room to be heated can easily be adjusted by a thermostatic valve placed on the connection between the discharge piping of the plant and the radiating element.

## Claims

1. Piping union (1) including a main body (2), having a passage (3) for a fluid equipped with at least an inlet (4) and at least an outlet (5), and at least an inlet tubular body (7), operably associable with said inlet (4) of said main body (2) and at least an outlet tubular body (8), operably associable with said outlet (5) of said main body (2), said inlet tubular body (7) and said outlet tubular body (8) being operably associable to pipings, wherein said main body (2) includes at least two secondary bodies (16) respectively containing said inlet (4) and said outlet (5) and at least a connecting body (17), wherein said two secondary bodies (16) are mutually associable by said connecting body (17) and movably associable with said connecting body (17) in a telescopic way for adjusting the distance between said inlet tubular body (7) and said outlet tubular body (8), and whereinsaid inlet tubular body (7) and said outlet tubular body (8) are respectively associable as a fitting to said inlet (4) and said outlet (5) of said main body (2),
**characterized in that** the piping union (1) further includes fastening means (10) which can be engaged with said inlet tubular body (7) and said outlet tubular body (8) by through-seats (11) obtained in said main body (2) for ensuring the fastening between said main body (2) and said inlet and outlet tubular bodies (7, 8).

2. Piping union (1) according to the preceding claim, **characterized in that** said inlet tubular body (7) and said outlet tubular body (8) can be screwed to said pipings through a thread (9).

3. Piping union (1) according to any one of the preceding claims, **characterized in that** said inlet tubular body (7) and said outlet tubular body (8) are equipped with first sealing gaskets (13) placed in correspondence with a portion (7a, 8a) associable to said main body (2) and with a portion (7b, 8b) associable to said pipings.

4. Piping union (1) according to any of claims 1 to 3, **characterized in that** said fastening means (10) are grub screws that can be screwed in a thread (12) of said through-seats (11) obtained on said main body (2).

5. Piping union (1) according to any one of the preceding claims, **characterized in that** said inlet tubular body (7) and said outlet tubular body (8) are associable to said main body (2) in such a way that a main axis (6) of said main body (2) is perpendicular to a main axis (14) of said inlet tubular body (7) and to a main axis (15) of said outlet tubular body (8).

6. Piping union (1) according to any one of the preceding claims, **characterized in that** said inlet tubular body (7) and said outlet tubular body (8) are associable with said main body (2) such that said main axis (14) of said inlet tubular body (7) is parallel to said main axis (15) of said outlet tubular body (8).

7. Piping union (1) according to any one of the preceding claims, wherein each secondary body (16) is equipped with a seat (20) in at least an end portion (21) thereof, in which the connecting body (17) is fitted for forming the structure of the main body (2).

8. Piping union (1) according to any of the preceding claims, **characterized in that** it further includes second sealing gaskets (18) for fixing the coupling between the secondary bodies (16) and the connecting body (17) and for avoiding leakages of said fluid from said passage (3).

9. Piping union (1) according to claim 8, **characterized in that** said second sealing gaskets (18) are placed in correspondence with portions of said connecting body (17) which are inserted into said secondary bodies (16).

10. Piping union (1) according to any of the preceding claims, **characterized in that** it includes three of said tubular bodies (7, 8) and three of said secondary bodies (16), said three secondary bodies (16) being movably associated between them and each one associable to one of said three tubular bodies (7, 8).

11. Piping union (1) according to claim 10, **characterized in that** said three secondary bodies (16) are telescopically associated therebetween.

12. Fluid dynamic plant **characterized in that** it includes a piping union (1) according to any of the preceding claims.

13. Radiating element having at least two manifolds connected by means of the piping union according to any of claims 1 to 11, wherein said inlet tubular body (7) and said outlet tubular body (8) are associated to said manifolds.

14. Radiating element according to claim 13, having in an upper part said two manifolds connected by means of a piping union according to any of claims 1 to 11 and in a lower part further two manifolds connected by means of a further piping union according to any of claims 1 to 11, and vertical tubes connecting one of the upper manifolds to one of the lower manifolds and the other of the upper manifolds to the other of the lower manifolds.

15. Method of assembly of the piping union (1) according to any of claims 1 to 11, wherein, after having screwed the inlet and outlet tubular bodies (7, 8) to manifolds of a radiating element, the main body (2) is carried out by mounting the secondary bodies (16) on the connecting body (17) and adjusting the distance thereof; subsequently, said main body (2) is fixed as a fitting on the inlet and outlet tubular bodies (7, 8), also using the fastening means (10), and the adjustment previously carried out on the telescopic mechanism is improved.

## Patentansprüche

1. Rohrverbindung (1), umfassend einen Hauptkörper (2), aufweisend einen Durchgang (3) für ein Fluid, ausgestattet mit mindestens einem Einlass (4) und mindestens einem Auslass (5), und mindestens einen Einlassrohrkörper (7), betriebswirksam assoziierbar mit dem Einlass (4) des Hauptkörpers (2), und mindestens einen Auslassrohrkörper (8), betriebswirksam assoziierbar mit dem Auslass (5) des Hauptkörpers (2), wobei der Einlassrohrkörper (7) und der Auslassrohrkörper (8) betriebswirksam mit Rohrleitungen assoziierbar sind, wobei der Hauptkörper (2) mindestens zwei Hilfskörper (16) umfasst, die jeweils den Einlass (4) bzw. den Auslass (5) enthalten, und mindestens einen Verbindungskörper (17), wobei die zwei Hilfskörper (16) gegenseitig durch den Verbindungskörper (17) assoziierbar und auf teleskopische Weise bewegbar mit dem Verbindungskörper (17) assoziierbar sind, um den Abstand zwischen dem Einlassrohrkörper (7) und dem Auslassrohrkörper (8) zu justieren, und wobei der Einlassrohrkörper (7) und der Auslassrohrkörper (8) jeweils als Fitting mit dem Einlass (4) und dem Auslass (5) des Hauptkörpers (2) assoziierbar sind, **dadurch gekennzeichnet, dass** die Rohrverbindung (1) zudem Befestigungsmittel (10) umfasst, die mit dem Einlassrohrkörper (7) und dem Auslassrohrkörper (8) durch Durchgangssitze (11), ausgebildet im Hauptkörper (2), in Eingriff gelangen können, um die Befestigung zwischen dem Hauptkörper (2) und dem Einlass- und dem Auslassrohrkörper (7, 8) zu gewährleisten.

2. Rohrverbindung (1) nach dem vorhergehenden Anspruch, **dadurch gekennzeichnet, dass** der Einlassrohrkörper (7) und der Auslassrohrkörper (8) mittels eines Gewindes (9) mit den Rohrleitungen verschraubt werden können.

3. Rohrverbindung (1) nach einem der vorhergehenden Ansprüche, **dadurch gekennzeichnet, dass** der Einlassrohrkörper (7) und der Auslassrohrkörper (8) mit ersten Dichtungspackungen (13) versehen sind, platziert an einem Abschnitt (7a, 8a), assoziierbar mit dem Hauptkörper (2), und an einem Abschnitt (7b, 8b), assoziierbar mit den Rohrleitungen.

4. Rohrverbindung (1) nach einem der Ansprüche 1 bis 3, **dadurch gekennzeichnet, dass** es sich bei den Befestigungsmitteln (10) um Gewindestifte handelt, die in einem Gewinde (12) der Durchgangssitze (11), die am Hauptkörper (2) ausgebildet sind, eingeschraubt werden können.

5. Rohrverbindung (1) nach einem der vorhergehenden Ansprüche, **dadurch gekennzeichnet, dass** der Einlassrohrkörper (7) und der Auslassrohrkörper (8) mit dem Hauptkörper (2) assoziierbar sind, sodass eine Hauptachse (6) des Hauptkörpers (2) rechtwinklig zu einer Hauptachse (14) des Einlassrohrkörpers (7) und zu einer Hauptachse (15) des Auslassrohrkörpers (8) verläuft.

6. Rohrverbindung (1) nach einem der vorhergehenden Ansprüche, **dadurch gekennzeichnet, dass** der Einlassrohrkörper (7) und der Auslassrohrkörper (8) mit dem Hauptkörper (2) assoziierbar sind, sodass die Hauptachse (14) des Einlassrohrkörpers (7) parallel zur Hauptachse (15) des Auslassrohrkörpers (8) verläuft.

7. Rohrverbindung (1) nach einem der vorhergehenden Ansprüche, wobei ein jeder Hilfskörper (16) mit einem Sitz (20) an mindestens einem Endabschnitt (21) davon ausgestattet ist, in den der Verbindungskörper (17) eingepasst wird, um die Struktur des Hauptkörpers (2) zu bilden.

8. Rohrverbindung (1) nach einem der vorhergehenden Ansprüche, **dadurch gekennzeichnet, dass** sie zudem zweite Dichtungspackungen (18) umfasst, um die Kupplung zwischen den Hilfskörpern (16) und dem Verbindungskörper (17) zu fixieren und Leckagen des Fluids aus dem Durchgang (3) zu vermeiden.

9. Rohrverbindung (1) nach Anspruch 8, **dadurch gekennzeichnet, dass** die zweiten Dichtungspackungen (18) an Abschnitten des Verbindungskörpers (17) platziert sind, die in die Hilfskörper (16) eingefügt sind.

10. Rohrverbindung (1) nach einem der vorhergehenden Ansprüche, **dadurch gekennzeichnet, dass** sie drei der Rohrkörper (7, 8) und drei der Hilfskörper (16) umfasst, wobei die drei Hilfskörper (16) bewegbar untereinander assoziiert sind und ein jeder mit den drei Rohrkörpern (7, 8) assoziierbar ist.

11. Rohrverbindung (1) nach Anspruch 10, **dadurch gekennzeichnet, dass** die drei Hilfskörper (16) teleskopisch untereinander assoziiert sind.

12. Fluiddynamische Anlage, **dadurch gekennzeichnet, dass** sie eine Rohrverbindung (1) nach einem der vorhergehenden Ansprüche umfasst.

13. Strahlelement, aufweisend mindestens zwei Verteilerrohre, verbunden mittels der Rohrverbindung nach einem der Ansprüche 1 bis 11, wobei der Einlassrohrkörper (7) und der Auslassrohrkörper (8) mit den Verteilerrohren assoziiert sind.

14. Strahlelement nach Anspruch 13, aufweisend in einem oberen Teil die zwei Verteilerrohre, verbunden mittels einer Rohrverbindung nach einem der Ansprüche 1 bis 11, und in einem unteren Teil zwei weitere Verteilerrohre, verbunden mittels einer weiteren Rohrverbindung nach einem der Ansprüche 1 bis 11, sowie vertikale Rohre, die eines der oberen Verteilerrohre mit einem der unteren Verteilerrohre und das andere der oberen Verteilerrohre mit dem anderen der unteren Verteilerrohre verbinden.

15. Verfahren zur Montage der Rohrverbindung (1) nach einem der Ansprüche 1 bis 11, wobei der Hauptkörper (2) nach dem Anschrauben des Einlass- und des Auslasskörpers (7, 8) an Verteilerrohren eines Strahlelements ausgeführt wird, indem die Hilfskörper (16) am Verbindungskörper (17) montiert und dessen Abstand justiert wird, wobei der Hauptkörper (2) anschließend als Fitting am Einlass- und am Auslasskörper (7, 8) auch durch Nutzung der Befestigungsmittel (10) fixiert wird und die zuvor am Teleskopmechanismus durchgeführte Justierung verbessert wird.

## Revendications

1. Raccord de tuyaux (1) incluant un corps principal (2), ayant un conduit (3) pour un fluide muni d'au moins une entrée (4) et d'au moins une sortie (5) et au moins un corps tubulaire d'entrée (7) opérationnellement associable à ladite entrée (4) dudit corps principal (2) et au moins un corps tubulaire de sortie (8), opérationnellement associable à ladite sortie (5) dudit corps principal (2), ledit corps tubulaire d'entrée (7) et ledit corps tubulaire de sortie (8) étant opérationnellement associables aux tuyaux, dans lequel ledit corps principal (2) inclut au moins deux corps secondaires (16) contenant respectivement ladite entrée (4) et ladite sortie (5) et au moins un corps de liaison (17), dans lequel lesdits deux corps secondaires (16) sont mutuellement associables au dit corps de liaison (17) et associables de façon mobile au dit corps de liaison (17) d'une façon télescopique pour régler la distance entre ledit corps tubulaire d'entrée (7) et ledit corps tubulaire de sortie (8), et dans lequel ledit corps tubulaire d'entrée (7) et ledit corps tubulaire de sortie (8) sont respectivement associables, comme un raccord de tuyauterie, à ladite entrée (4) et à ladite sortie (5) dudit corps principal (2), **caractérisé en ce que** le raccord de tuyaux (1) inclut de plus des moyens de fixation (10) pouvant se mettre en prise avec ledit corps tubulaire d'entrée (7) et ledit corps tubulaire de sortie (8) par des sièges traversants (11) obtenus dans ledit corps principal (2) pour garantir la fixation entre ledit corps principal (2) et lesdits corps tubulaires d'entrée et de sortie (7, 8).

2. Raccord de tuyaux (1) selon la revendication précédente, **caractérisé en ce que** ledit corps tubulaire d'entrée (7) et ledit corps tubulaire de sortie (8) peuvent être vissés auxdits tuyaux par un filetage (9).

3. Raccord de tuyaux (1) selon l'une quelconque des revendications précédentes, **caractérisé en ce que** ledit corps tubulaire d'entrée (7) et ledit corps tubulaire de sortie (8) sont munis de premiers joints d'étanchéité (13) situés au niveau d'une partie (7a, 8a) associable au dit corps principal (2) et d'une partie (7b, 8b) associable auxdits tuyaux.

4. Raccord de tuyaux (1) selon l'une quelconque des revendications de 1 à 3, **caractérisé en ce que** lesdits moyens de fixation (10) sont des vis sans tête pouvant être vissées dans un filetage (12) desdits sièges traversants (11) obtenus dans ledit corps principal (2).

5. Raccord de tuyaux (1) selon l'une quelconque des revendications précédentes, **caractérisé en ce que** ledit corps tubulaire d'entrée (7) et ledit corps tubulaire de sortie (8) sont associables au dit corps principal (2) de sorte qu'un axe principal (6) dudit corps principal (2) soit perpendiculaire à un axe principal (14) dudit corps tubulaire d'entrée (7) et à un axe principal (15) dudit corps tubulaire de sortie (8).

6. Raccord de tuyaux (1) selon l'une quelconque des revendications précédentes, **caractérisé en ce que** le corps tubulaire d'entrée (7) et ledit corps tubulaire de sortie (8) sont associables au dit corps principal (2) de sorte que ledit axe principal (14) dudit corps tubulaire d'entrée (7) soit parallèle au dit axe principal (15) dudit corps tubulaire de sortie (8).

7. Raccord de tuyaux (1) selon l'une quelconque des revendications précédentes, dans lequel chaque corps secondaire (16) est muni d'un siège (20), dans au moins sa partie d'extrémité (21), dans lequel le corps de liaison (17) est monté pour former la structure du corps principal (2).

8. Raccord de tuyaux (1) selon l'une quelconque des revendications précédentes, **caractérisé en ce qu'**il inclut de plus des seconds joints d'étanchéité (18) destinés à fixer l'accouplement entre les corps secondaires (16) et le corps de liaison (17) et à empêcher toute fuite dudit fluide dudit conduit (3).

9. Raccord de tuyaux (1) selon la revendication 8, **caractérisé en ce que** lesdits seconds joints d'étanchéité (18) sont situés au niveau de parties dudit corps de liaison (17) qui sont insérées dans lesdits corps secondaires (16).

10. Raccord de tuyaux (1) selon l'une quelconque des revendications précédentes, **caractérisé en ce qu'**il inclut trois desdits corps tubulaires (7, 8) et trois desdits corps secondaires (16), lesdits trois corps secondaires (16) étant associés de façon mobile entre eux et chacun associable à l'un desdits trois corps tubulaires (7, 8).

11. Raccord de tuyaux (1) selon la revendication 10, **caractérisé en ce que** lesdits trois corps secondaires (16) sont associés entre eux de façon télescopique.

12. Installation de dynamique des fluides **caractérisée en ce qu'**elle inclut un raccord de tuyaux (1) selon l'une quelconque des revendications précédentes.

13. Élément rayonnant ayant au moins deux manifolds raccordés au moyen du raccord de tuyaux selon l'une quelconque des revendications de 1 à 11, dans lequel ledit corps tubulaire d'entrée (7) et ledit corps tubulaire de sortie (8) sont associés auxdits manifolds.

14. Élément rayonnant selon la revendication 13, ayant dans une partie supérieure lesdits deux manifolds reliés au moyen d'un raccord de tuyaux selon l'une quelconque des revendications de 1 à 11 et dans une partie inférieure deux autres manifolds reliés au moyen d'un autre raccord de tuyaux selon l'une quelconque des revendications de 1 à 11, ainsi que des tubes verticaux reliant l'un des manifolds supérieurs à l'un des manifolds inférieurs et l'autre des manifolds supérieurs à l'autre des manifolds inférieurs.

15. Procédé d'assemblage du raccord de tuyaux (1) selon l'une quelconque des revendications de 1 à 11, dans lequel, après avoir vissé les corps tubulaires d'entrée et de sortie (7, 8) aux manifolds d'un élément rayonnant, le corps principal (2) est réalisé en montant les corps secondaires (16) sur le corps de liaison (17) et en réglant sa distance ; subséquemment, ledit corps principal (2) est fixé comme un raccord de tuyauterie sur les corps tubulaires d'entrée et de sortie (7, 8), en utilisant aussi les moyens de fixation (10), et le réglage précédemment effectué sur le mécanisme télescopique est amélioré.
